(19) Europäisches Patentamt
European Patent Office
Office européen des brevets

(11) **EP 1 009 173 B1**

(12) **FASCICULE DE BREVET EUROPEEN**

(45) Date de publication et mention
de la délivrance du brevet:
**06.05.2009 Bulletin 2009/19**

(51) Int Cl.:
*H04Q 3/68* *(2006.01)*    *H04L 12/56* *(2006.01)*
*H04Q 11/04* *(2006.01)*

(21) Numéro de dépôt: **99403035.1**

(22) Date de dépôt: **06.12.1999**

(54) **Matrice de commutateurs binaires à tolérance de fautes**

Fehlertolerantes Koppelfeld mit binären Schaltelementen

Fault-tolerant matrix of binary switches

(84) Etats contractants désignés:
**AT BE CH CY DE DK ES FI FR GB GR IE IT LI LU MC NL PT SE**

(30) Priorité: **07.12.1998 FR 9815397**

(43) Date de publication de la demande:
**14.06.2000 Bulletin 2000/24**

(73) Titulaire: **Thales**
**92200 Neuilly-sur-Seine (FR)**

(72) Inventeurs:
• **Darrot, Eric**
**06650 Opio (FR)**
• **Vaillant, Bruno**
**31400 Toulouse (FR)**

(74) Mandataire: **Esselin, Sophie et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A- 0 739 146**

• **SHEN S-M: "DBTEST: AN EFFICIENT, HIGH-PERFORMANCE, FAULT-TOLERANT FABRIC FOR BROADBAND ISDN" PROCEEDINGS OF THE IEEE INTERNATIONAL CONFERENCE ON COMMUNICATIONS (ICC' 95), SEATTLE, WA, USA, 18-22 JUNE 1995, pages 1142-1146, XP000533166**
• **BANSAL P K ET AL: "FAUL TOLERANT DOUBLE TREE MULTISTAGE INTERCONNECTION NETWORK" PROCEEDINGS OF THE TENTH ANNUAL JOINT CONFERENCE OF THE IEEE COMPUTER AND COMMUNICATIONS SOCIETIES (INFOCOM' 91), BAL HARBOUR, FL, USA, 7-11 APRIL 1991, pages 462-468, XP000223369**
• **FUNAHASHI A ET AL: "FAULT TOLERANCE OF THE TBSF (TANDEM BANYAN SWITCHING FABRICS) AND PBSF (PILED BANYAN SWITCHING FABRICS)" IEICE TRANSACTIONS ON INFORMATION AND SYSTEMS, vol. E79-D, no. 8, AUGUST 1996, pages 1180-1189, XP000628518**

EP 1 009 173 B1

**Description**

L'invention est relative à une matrice de commutateurs à deux positions chacun.

Une matrice, ou réseau, de ce genre comprend n entrées et p sorties. Elle permet d'aiguiller tout arrangement de m signaux entrants vers le même nombre de sorties. La commande de la matrice est telle que tous les arrangements des m signaux entrants soient possibles sur m sorties. Les nombres n et p peuvent être quelconques. Une matrice à p entrées et n sorties a une structure qui se déduit par symétrie de celle d'une matrice à n entrées et p sorties. Dans ces conditions, dans ce qui suit, on se contentera de décrire une matrice pour laquelle le nombre p de sorties est au moins égal au nombre n d'entrées.

De telles matrices sont couramment utilisées dans le domaine des télécommunications ou dans les ordinateurs. Elles sont formées d'un ensemble de commutateurs à deux entrées et deux sorties chacun. Chaque commutateur comporte deux positions ; dans la première position, la première entrée est connectée à la première sortie et la deuxième entrée est reliée à la deuxième sortie ; dans la seconde position, la première entrée est reliée à la deuxième sortie et la seconde entrée est reliée à la première sortie.

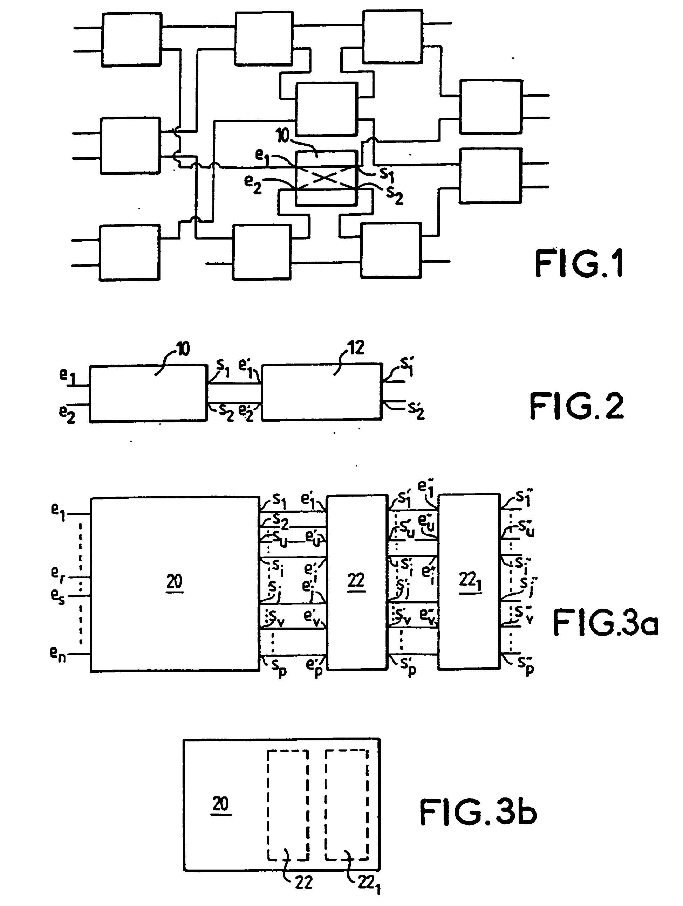

Un exemple de matrice connue à six entrées et six sorties est représenté sur la figure 1.

Sur cette figure, chaque commutateur 10 est représenté par un carré avec deux entrées $e_1$, $e_2$ et deux sorties $s_1$, $s_2$.

Dans la position représentée en traits pleins, $e_1$ est connectée à $s_1$ et $e_2$ à $s_2$. Dans la seconde position, représentée en traits interrompus, $e_1$ est reliée à $s_2$ et $e_2$ à $s_1$.

Lorsqu'un commutateur est en panne, la matrice peut ne plus tenir son rôle.

Pour qu'une matrice puisse supporter une panne de commutateur, il est, de façon générale, admis de prévoir un nombre de commutateurs supérieur au nombre minimum nécessaire.

Pour réaliser une matrice supportant une panne quelconque de commutateur, on peut associer à chaque commutateur 10 un commutateur 12 en série, comme représenté sur la figure 2. Si le commutateur 10 reste bloqué dans une position, par exemple correspondant aux connexions $e_1$-$s_1$ et $e_2$-$s_2$, le commutateur 12 permettra, malgré tout, de relier à volonté $e_1$ à $s'_1$ ou à $s'_2$, et de relier $e_2$ à $s'_2$ ou à $s'_1$. Mais, cette solution entraîne un doublement du nombre de commutateurs et est donc onéreuse.

Par contre, quand on cherche à limiter le nombre de commutateurs en excès, la topologie du réseau équipé de commutateurs supplémentaires doit être déterminée cas par cas. Cette détermination est longue et complexe quand le nombre d'entrées et de sorties dépasse 4 ou 5.

L'invention permet de remédier à cet inconvénient.

Dans la publication de FUNAHASHI A ET AL. "FAULT TOLERANCE OF THE TBSF (TANDEM BANYAN SWITCHING FABRICS) AND PBSF (PILED BANTAN SWITCHING FABRICS"), IEICE TRANSACTIONS ON INFORMATION AND SYSTEMS, vol. E79-D, no. 8, août 1996, pages 1180-1189, on associe une matrice supplémentaire, ou matrice de dépannage, qui comprend un même nombre d'entrées et de sorties au moins égal au nombre n d'entrées de la matrice principale. Selon l'invention les commutateurs de la matrice supplémentaire sont agencés de façon telle que celle-ci agit comme un simple commutateur dont les entrées sont constituées par n'importe quel couple d'entrées de cette matrice de dépannage et dont les deux sorties sont constituées par les deux sorties de la matrice de dépannage qui ont le même rang que le couple d'entrées, les autres entrées de la matrice de dépannage étant connectées aux sorties de même rang de cette matrice.

On a, en effet, observé qu'une panne d'un commutateur dans la matrice principale a pour seul effet que les signaux sur deux sorties déterminées sont permutés quand on cherche à mettre le commutateur bloqué dans la position inopérante.

La matrice de dépannage a ainsi un rôle beaucoup plus simple que la matrice principale. Elle doit, en effet, pouvoir effectuer une commutation sur un nombre

$$c_2^n$$

ou C

$$c_2^p$$

de couples ayant pour valeur :

$$C_2^n = \frac{n!}{2(n-2)!}, \text{ ou } C_2^p = \frac{p!}{2(p-2)!},$$

alors que la matrice principale doit pouvoir réaliser au moins n! combinaisons. La matrice de dépannage peut donc comporter un nombre plus réduit de commutateurs et sa réalisation est aisée.

La matrice de dépannage peut être disposée de façon telle que ses entrées soient reliées aux sorties de la matrice principale. On peut aussi disposer la matrice de dépannage de façon telle que ses sorties soient reliées aux entrées de la matrice principale. Si on prévoit plusieurs matrices de dépannage, celles-ci sont, par exemple, disposées en série.

En variante, la matrice de dépannage est disposée à l'intérieur de la matrice principale de façon telle qu'une entrée et une sortie de même rang i de la matrice de dépannage soient intercalées sur le trajet d'un conducteur acheminant un signal sur une sortie de rang déterminé $k_i$ du réseau principal, aucun autre couple d'entrée/sortie de la matrice de dépannage n'étant intercalé dans le trajet du signal destiné à la sortie de rang $k_i$ de la matrice principale.

Selon l'invention permettant de minimiser au maximum le nombre de commutateurs, on prévoit une matrice de dépannage avec un nombre de commutateurs qui est égal au nombre d'entrées et de sorties de cette matrice montés de la façon suivante :

La première entrée et la première sortie du commutateur de rang i constituent, respectivement, l'entrée et la sortie de rang i de la matrice de dépannage ;
la deuxième entrée de chaque commutateur est reliée à la deuxième sortie du commutateur de rang immédiatement supérieur, et
la deuxième sortie du commutateur de rang 1 est reliée à la deuxième entrée du dernier commutateur.

Dans ce mode de réalisation, la matrice de dépannage permet de corriger une panne de la matrice principale qui consiste en un blocage d'un seul commutateur de cette matrice.

Si on veut faire face à des pannes plus sévères, on fera appel à plusieurs matrices de dépannage, le nombre de ces dernières étant égal au nombre maximum prévisible de commutateurs qui peuvent être bloqués simultanément.

La présente invention prévoit une matrice de commutateurs à deux positions chacun permettant de transférer m signaux d'entrées vers le même nombre de sorties, la commande de la matrice étant telle que tous les arrangements de m signaux entrants soient possibles sur m sorties. Cette matrice comporte une matrice principale et une matrice de dépannage qui comprend un même nombre d'entrées et de sorties, les commutateurs de cette matrice de dépannage étant agencés et commandés de façon telle qu'elle agit comme un simple commutateur dont les entrées sont constituées par n'importe quel couple d'entrées de cette matrice de dépannage et dont les deux sorties sont constituées par les deux sorties de cette matrice de dépannage qui ont le même rang que le couple d'entrées, les autres entrées de la matrice de dépannage étant connectées aux sorties de même rang de cette matrice.

Le nombre d'entrées et sorties de la matrice de dépannage est au moins égal au plus petit des deux nombres n et p, n étant le nombre d'entrées de la matrice principale et p son nombre de sorties.

Selon l'invention, la matrice de dépannage comporte un nombre de commutateurs qui est égal au nombre d'entrées et de sorties de cette machine montés de façon telle que la première entrée et la première sortie du commutateur de rang i constituent, respectivement, l'entrée et la sortie de rang i de cette matrice de dépannage, la deuxième entrée de chaque commutateur est reliée à la deuxième sortie du commutateur de rang immédiatement supérieur, et la deuxième sortie du commutateur de rang 1 est reliée à la deuxième entrée du dernier commutateur.

Selon un mode de réalisation, les moyens de commande de la matrice de dépannage sont tels que les commutateurs correspondant au couple d'entrées et sorties à commuter sont actionnés en cas de panne.

Selon un mode de réalisation, la matrice de dépannage comporte p entrées et p sorties, ses p entrées étant connectées aux p sorties de la matrice principale.

Selon un mode de réalisation, la matrice de dépannage est disposée en amont de la matrice principale, ses n sorties étant connectées aux n entrées de la matrice principale.

Selon un mode de réalisation, la matrice de dépannage est disposée à l'intérieur de la matrice principale de façon telle qu'une entrée et une sortie de même rang i de cette matrice de dépannage soient intercalées dans le trajet d'un conducteur amenant un signal sur une sortie de rang déterminé de la matrice principale, aucun autre couple d'entrée/sortie de la matrice de dépannage n'étant intercalé dans le trajet du signal destiné à la sortie du rang déterminé de la matrice principale.

Selon un mode de réalisation, la matrice comporte un nombre de matrices de dépannage égal au nombre maximum prévisible de commutateurs de la matrice principale qui peuvent être bloqués simultanément.

D'autres caractéristiques et avantages de l'invention apparaîtront avec la description de certains de ses modes de réalisation, celle-ci étant effectuée en se référant aux dessins ci-annexés, sur lesquels :

les figures 1 et 2, déjà décrites, montrent respectivement une matrice de commutateurs et deux commutateurs en série,

les figures 3a, 3b et 3c sont des schémas montrant trois montages combinant des matrices de dépannage avec une matrice principale,

la figure 4 est un schéma d'un mode de réalisation de matrice de dépannage à trois entrées et trois sorties, qui ne fait pas partie de l'invention,

la figure 5 est un schéma montrant comment une matrice de dépannage à p+1 entrées et p+1 sorties peut être réalisée à partir d'une matrice de dépannage à p entrées et p sorties, qui ne fait pas partie de l'invention,

la figure 6 est un schéma d'une réalisation de matrice de dépannage d'ordre p, qui ne fait pas partie de l'invention,

la figure 7 est un schéma d'une réalisation d'une matrice de dépannage d'ordre 8, qui ne fait pas partie de l'invention, et

la figure 8 est un schéma du mode de réalisation de matrice de dépannage d'ordre p selon l'invention.

Dans une matrice de commutateurs du type de celle représentée sur la figure 1, les seules pannes qui, en pratique, peuvent intervenir sont des blocages de commutateur(s). Un commutateur bloqué transmet sur ses sorties les signaux appliqués sur ses entrées mais il ne peut plus remplir sa fonction d'aiguillage ou commutation. Par exemple, si le commutateur 10 représenté sur la figure 2 est bloqué dans la position représentée, l'entrée $e_1$ sera toujours reliée à la sortie $s_1$ et l'entrée $e_2$ à la sortie $s_2$ et il ne sera pas possible d'obtenir la seconde position, c'est-à-dire la connexion de $e_1$ à $s_2$ et de $e_2$ à $s_1$.

Un blocage d'un commutateur de la matrice se traduit par le fait que, par rapport à l'aiguillage attendu, la connexion inopérante correspond à une inversion de signaux sur deux sorties de la matrice. Autrement dit, si on commande un commutateur de façon telle que les signaux des entrées $e_r$ et $e_s$ doivent se retrouver sur les sorties, respectivement si et sj, et si le commutateur est bloqué, les signaux des entrées $e_r$ et $e_s$ se retrouveront sur les sorties, respectivement $s_i$ et $s_i$ (au lieu de se trouver sur les sorties $s_i$ et $s_i$).

En général, la matrice est associée à un dispositif de commande permettant d'actionner individuellement chaque commutateur et des moyens de contrôle sont prévus pour vérifier que chacun de ces commutateurs exerce correctement sa fonction. Par exemple, une telle matrice est utilisée dans un satellite de télécommunication comportant une pluralité d'antennes de réception et de ré-émission et la matrice sert à aiguiller les signaux des antennes de réception vers des antennes de ré-émission. Dans ce cas, les commutateurs sont commandés à partir du sol ou par un programme à bord du satellite, et chaque commutateur envoie au sol un signal de contrôle de l'opération effectuée.

Les commutateurs sont, en général, de type mécanique de façon à ce qu'ils soient susceptibles de toujours transmettre des signaux et que les pannes pouvant intervenir consistent seulement en un blocage. De plus, les commutateurs sont habituellement d'une grande fiabilité de sorte que la probabilité pour que plusieurs commutateurs tombent en panne simultanément est très faible.

L'invention consiste à associer à la matrice de commutateurs à protéger contre les pannes, une matrice supplémentaire, ou matrice de dépannage, comportant le même nombre d'entrées et de sorties. Ce nombre est égal au nombre p de sorties de la matrice principale. Il peut aussi être égal au nombre n d'entrées de la matrice principale. La matrice de dépannage est agencée et commandée de façon telle qu'elle permette de rétablir l'aiguillage défectueux. Autrement dit, quand un commutateur de la matrice principale est bloqué, la matrice de dépannage rétablit les bonnes connexions.

Ainsi, sur la figure 3a, la matrice principale 20 comporte n entrées, $e_1$ à en, et p sorties $s_1$ à $s_p$, p étant supérieur à n, et on a représenté sur cette figure les entrées $e_r$ et $e_s$ ainsi que les sorties si et sj correspondant aux signaux traversant le commutateur bloqué. Dans le cas de cette figure 3a, on prévoit une matrice de dépannage 22 dont les entrées ont pour références $e'_1$ à $e'_p$ et les sorties pour références $s'_1$ à $s'_p$. En l'absence de panne, la matrice 22 n'effectue aucun aiguillage ; elle transmet l'entrée $e'_1$ sur la sortie $s'_1$, l'entrée $e'_2$ sur la sortie $s'_2$, etc. Quand un commutateur de la matrice principale 20 est bloqué, la matrice de dépannage 22 est commandée de façon telle que, pour la position inopérante (c'est-à-dire la position qui ne peut être obtenue) du commutateur bloqué de la matrice 20, l'entrée $e'_i$ soit connectée à la sortie $s'_i$ et l'entrée $e'_i$ soit connectée à la sortie $s'_i$. Ainsi, les sorties $s'_1$, $s'_2$ ... $s'_i$ ... $s'_i$ ... $s'_p$ présentent des signaux correctement aiguillés. L'ensemble de la matrice 20 et de la matrice de dépannage 22 constitue la matrice de commutation.

Si un commutateur de la matrice 22 de dépannage tombe en panne, alors que la matrice principale ne présente pas de commutateur défaillant, alors la matrice principale 20 est commandée pour corriger la panne intervenant dans la matrice 22.

Si on veut pouvoir faire face à la défaillance simultanée de plusieurs commutateurs de la matrice principale 20, on prévoira un nombre de matrices de dépannage supplémentaires égal au nombre maximum prévisible de commutateurs qui peuvent tomber en panne simultanément dans la matrice principale.

Ainsi, sur la figure 3a, on a représenté une seconde matrice de dépannage $22_1$ dont les entrées $e''_1$ à $e''_p$ sont reliées aux sorties respectivement $s'_1$, $s'_p$ de la matrice 22 et dont les sorties $s''_1$ à $s''_p$ constituent alors les sorties correctes. Cette seconde matrice de dépannage $22_1$ interviendra pour inverser les signaux des sorties $s_U$ et $s_V$ correspondant à un blocage d'un autre commutateur de la matrice principale, alors que le premier commutateur reste bloqué. Autrement dit, dans la position inopérante de cet autre commutateur, la matrice $22_1$ connecte son entrée $e''_U$ à sa sortie $s''_V$ et, inversement, son entrée $e''_V$ à sa sortie $s''_U$.

Comme représenté sur la figure 3b, il est possible de disposer la (ou les) matrice(s) de dépannage 22, $22_1$ à l'intérieur de la matrice principale 20 à protéger contre les pannes. La connexion de la matrice 22 à la matrice 20 est telle qu'on choisit p conducteurs à l'intérieur de la matrice 20 par lesquels doivent toujours passer p signaux différents et on intercale les matrices 22 et $22_1$ sur ces conducteurs. De façon plus précise, l'entrée et la sortie de rang i de la matrice de dépannage sont disposées sur le trajet du signal devant aboutir à la sortie de même rang i de la matrice principale.

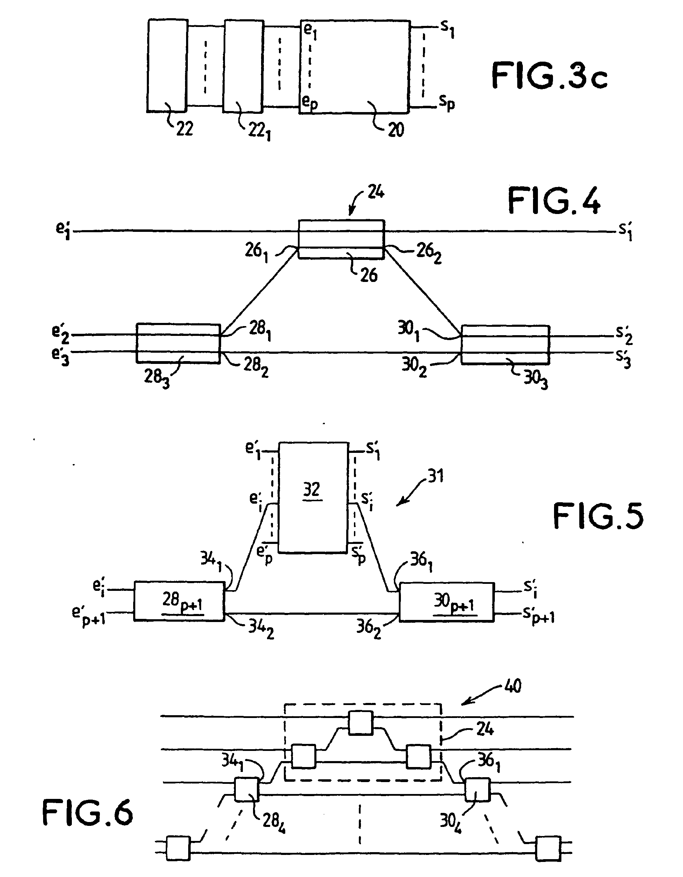

La figure 3c montre un autre mode de réalisation dans lequel les matrices de dépannage 22 et $22_1$ sont disposées en amont de la matrice 20 à dépanner. Cette réalisation permet de minimiser le nombre d'entrées et de sorties (et donc de commutateurs) de la matrice de dépannage.

On va maintenant décrire en relation avec la figure 4 un mode de réalisation de matrice de dépannage pour une matrice principale à trois sorties (si les entrées de la matrice de dépannage sont connectées aux sorties de cette matrice) ou à trois entrées (si la matrice de dépannage est disposée en amont de la matrice principale).

Cette matrice de dépannage 24 comporte trois commutateurs, respectivement 26, $28_3$ et $30_3$. La première entrée du commutateur 26 constitue la première entrée $e'_1$ de la matrice 24. De même, la première sortie du commutateur 26 constitue la première sortie $s'_i$ de la matrice 24. Les deux entrées du commutateur $28_3$ constituent les entrées $e'_2$ et $e'_3$ de la matrice 24. De façon analogue, les sorties du commutateur $30_3$ constituent les sorties $s'_2$ et $s'_3$ de la matrice 24. La première sortie $28_1$ du commutateur $28_3$ est reliée à la seconde entrée $26_1$ du commutateur 26. De façon analogue, la seconde sortie $26_2$ du commutateur 26 est reliée à la première entrée $30_1$ du commutateur $30_3$. Enfin, la deuxième sortie $28_2$ du commutateur $28_3$ est reliée à la deuxième entrée $30_2$ du commutateur $30_3$.

En l'absence de panne dans la matrice principale 20, les commutateurs sont dans la position représentée sur la figure, c'est-à-dire que les entrées $e'_1$, $e'_2$, $e'_3$ sont reliées aux sorties, respectivement, $s'_1$, $s'_2$ et $s'_3$.

Si l'entrée $e'_1$ doit être connectée à la sortie $s'_2$ et l'entrée $e'_2$ à la sortie $s'_1$, il suffit d'inverser la position du commutateur 26 et de laisser les commutateurs $28_3$ et $30_3$ dans la position représentée.

Si l'entrée $e'_1$ doit être reliée à la sortie $s'_3$ et l'entrée $e'_3$ à la sortie $s'_1$, on place chacun des trois commutateurs 26, $28_3$ et $30_3$ dans la position inverse de celle représentée sur la figure 4.

Quand on veut connecter $e'_2$ à $s'_3$ et $e'_3$ à $s'_2$, il suffit de positionner le commutateur $28_3$ ou le commutateur $30_3$ dans la seconde position et de laisser les deux autres commutateurs dans la position représentée.

La figure 5 montre comment une matrice de dépannage à p+1 entrées (matrice d'ordre p+1) peut être réalisée à partir d'une matrice de dépannage à p entrées (matrice d'ordre p). A cet effet, on associe à la matrice de dépannage 32 d'ordre p, deux commutateurs $28_{p+1}$ et $30_{p+1}$ montés, par rapport à la matrice 32, de la même manière que sont montés les commutateurs $28_3$ et $30_3$ par rapport au commutateur 26.

De façon plus précise : la première sortie $34_1$ du commutateur $28_{p+1}$ est reliée à une entrée $e'_i$ (i peut être choisi de façon arbitraire) de la matrice 32 ; la sortie $s'_i$ de cette matrice 32 est reliée à la première entrée $36_1$ du commutateur $30_{p+1}$ et la seconde sortie $34_2$ du commutateur 34 est reliée à la seconde entrée $36_2$ du commutateur $30_{p+1}$.

Dans ce cas, l'entrée $e'_i$ de la matrice d'ordre p+1 est constituée par l'une des deux entrées du commutateur $28_{p+1}$, par exemple sa première entrée, et la seconde entrée du commutateur $28_{p+1}$ constitue l'entrée $e'_{p+1}$. De même, la sortie $s'_i$ de la matrice d'ordre p+1 est constituée par la première sortie du commutateur $30_{p+1}$ (si la première entrée du commutateur $28_{p+1}$ constitue l'entrée $e'_i$). La seconde sortie du commutateur $30_{p+1}$ constitue la sortie $s'_{p+1}$ de la matrice d'ordre p+1.

Le fonctionnement de cette matrice 31 de dépannage se déduit du fonctionnement de la matrice 24 à trois entrées et trois sorties.

La matrice 40 d'ordre p qui est représentée sur la figure 6 est obtenue en utilisant le procédé de montage décrit en relation avec la figure 5, mais en connectant à chaque fois la dernière entrée $e'_p$ de la matrice d'ordre p à la première sortie $34_1$ du commutateur supplémentaire $28_{p+1}$ et, en connectant la dernière sortie $s'_p$ de la matrice d'ordre p à la première entrée $36_1$ du commutateur supplémentaire $30_{p+1}$. On voit ainsi que la première sortie $34_1$ du commutateur $28_4$ de la matrice de dépannage d'ordre 4 est connectée à l'entrée de rang 3 de la matrice de dépannage 24 d'ordre 3. De même, la première entrée $36_1$ du commutateur $30_4$ est reliée à la troisième sortie de la matrice 24 d'ordre 3.

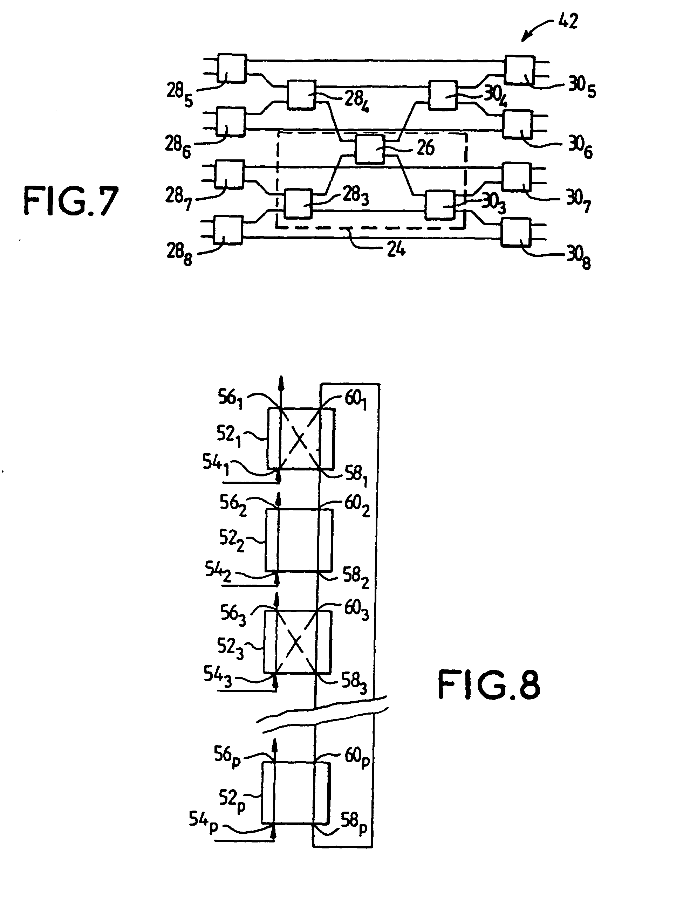

La figure 7 est un schéma correspondant au cas d'une matrice de dépannage d'ordre 8.

Cette matrice 42 est aussi réalisée à partir du procédé décrit en relation avec la figure 5. Toutefois, dans ce cas, on choisit, à chaque fois, dans la matrice d'ordre p, le rang i des entrée et sortie auxquelles sont connectés les commutateurs supplémentaires $28_{p+1}$ et $30_{p+1}$ pour que la structure soit équilibrée, c'est-à-dire pour que la grande majorité des signaux traverse le même nombre de commutateurs entre l'entrée et la sortie correspondante.

Ainsi, Partant de la matrice 24 d'ordre 3 à commutateurs 26, $28_3$ et $30_3$, on passe à la matrice d'ordre 4 en connectant les commutateurs $28_4$ et $30_4$, respectivement, à la première entrée et à la première sortie de la matrice 24 d'ordre 3.

Ensuite, on utilise chacune des entrées et des sorties restées disponibles de la matrice de dépannage d'ordre 4 pour connecter les couples de commutateurs $28_5$, $30_5$ ; $28_6,30_6$ ; $28_7,30_7$ et $28_8,30_8$.

Dans le mode de réalisation de l'invention qui est représenté sur la figure 8, on prévoit un nombre de commutateurs qui est égal au nombre d'entrées et de sorties de la matrice de dépannage 50.

Chaque commutateur $52_i$, par exemple le commutateur $52_2$, présente une première entrée $54_2$ constituant l'entrée de rang 2 de la matrice 50 et une première sortie $56_2$ constituant la sortie de rang 2 de cette matrice 50. La seconde entrée $58_2$ du commutateur $52_2$ est reliée à la seconde sortie $60_3$ du commutateur $52_3$ suivant. La seconde sortie $60_2$ du commutateur $58_2$ est reliée à la seconde entrée $58_1$ du commutateur $52_1$ de rang inférieur. Enfin, la seconde sortie $60_1$ du premier commutateur $52_1$ est reliée à la seconde entrée $58_p$ du dernier commutateur $52_p$.

Les commutateurs sont, en l'absence de panne, dans leur première position, c'est-à-dire celle pour laquelle la première entrée $54_i$ est connectée à la première sortie 56j.

Quand une panne intervient dans la matrice principale, il est nécessaire d'aiguiller le signal appliqué sur l'entrée $54_i$ vers la sortie $56_{i+k}$ et d'aiguiller le signal appliqué sur l'entrée $54_{i+k}$ vers la sortie $56_i$. A cet effet, on place les commutateurs $52_i$ et $52_{i+k}$ dans leur seconde position.

Ainsi, dans le schéma représenté sur la figure 8, les commutateurs $52_1$ et $52_3$ sont dans la seconde position, alors que les autres commutateurs se trouvent dans la première position. Dans ces conditions, le signal appliqué sur l'entrée $56_1$ passe par la seconde sortie $60_1$ du commutateur $52_3$, par la seconde entrée $58_p$ du commutateur $52_p$, et par la seconde entrée du commutatéur $52_3$ et il aboutit à la première sortie $56_3$ du commutateur $52_3$. De même, le signal appliqué sur l'entrée $54_3$ du commutateur $52_3$ passe par la seconde sortie $60_3$ de ce commutateur, et par la seconde entrée $58_1$ du commutateur $52_1$ et aboutit à la première sortie $56_1$ du commutateur $52_1$.

Bien que la plupart des exemples aient été décrits pour une connexion de la matrice de dépannage en aval de la matrice principale, il va de soi que ces exemples sont aussi utilisables dans le cas où la matrice de dépannage est disposée en amont. Dans ce cas, cette matrice de dépannage comporte n entrées et n sorties.

**Revendications**

1. Matrice de commutateurs à deux positions chacun permettant de transférer m signaux entrants vers m sorties, la matrice étant destinée à supporter des pannes de blocage des commutateurs, la commande de la matrice étant telle que tous les arrangements de m signaux entrants soient possibles sur m sorties, la matrice comportant une matrice principale (20) et une matrice de dépannage (22, $22_1$), ladite matrice de dépannage comprenant un nombre d'entrées et un même nombre de sorties, ledit nombre d'entrées et sorties de ladite matrice de dépannage étant au moins égal au plus petit des nombres n et p, n étant le nombre d'entrées de la matrice principale, et p le nombre de sorties de ladite matrice principale, **caractérisée en ce que** les commutateurs de ladite matrice de dépannage sont agencés et commandés de façon telle qu'elle agit comme un simple commutateur dont les entrées sont constituées par n'importe quel couple ($e'_i$, $e'_j$) d'entrées de ladite matrice de dépannage et dont les deux sorties sont constituées par les deux sorties ($s'_i$, $s'_j$) de ladite matrice de dépannage qui ont le même rang que ledit couple d'entrées, les autres entrées de la matrice de dépannage étant connectées aux sorties de même rang de ladite matrice principale et **en ce que** ladite matrice de dépannage comporte un nombre de commutateurs ($52_1$, ... $52_p$) qui est égal au nombre d'entrées et de sorties de cette matrice montés de façon telle que la première entrée ($54_i$) et la première sortie ($56_i$) du commutateur de rang i constituent, respectivement, l'entrée et la sortie de rang i de cette matrice de dépannage,
la deuxième entrée ($58_i$) de chaque commutateur étant reliée à la deuxième sortie ($60_{i+1}$) du commutateur de rang immédiatement supérieur, et
la deuxième sortie ($60_1$) du commutateur de rang 1 étant reliée à la deuxième entrée ($58_p$) du commutateur de rang n ou p.

2. Matrice selon la revendication 1, **caractérisée en ce que** les moyens de commande de la matrice de dépannage sont tels que les commutateurs correspondant au couple d'entrées et sorties à commuter sont actionnés en cas de panne.

3. Matrice selon l'une quelconque des revendications précédentes, **caractérisée en ce que** la matrice de dépannage comporte p entrées et p sorties, ses p entrées étant connectées aux p sorties de la matrice principale.

4. Matrice selon l'une quelconque des revendications 1 ou 2, **caractérisée en ce que** la matrice de dépannage est disposée en amont de la matrice principale, ses n sorties étant connectées aux n entrées de la matrice principale.

5. Matrice selon l'une quelconque des revendications 1 ou 2, **caractérisée en ce que** la matrice de dépannage est disposée à l'intérieur de la matrice principale de façon telle qu'une entrée et une sortie de même rang i de cette matrice de dépannage soient intercalées dans le trajet d'un conducteur amenant un signal sur une sortie de rang déterminé de la matrice principale, aucun autre couple d'entrée/sortie de la matrice de dépannage n'étant intercalé dans le trajet du signal destiné à la sortie du rang déterminé de la matrice principale.

**6.** Matrice selon l'une quelconque des revendications précédentes, **caractérisée en ce qu'**elle comporte un nombre de matrices de dépannage égal au nombre maximum prévisible de commutateurs de la matrice principale qui peuvent être bloqués simultanément.

## Claims

**1.** Matrix of switches with two positions each making it possible to transfer m incoming signals to m outputs, the matrix being designed to withstand blocking failures of the switches, control of the matrix being such that all the arrangements of m incoming signals are possible on m outputs, the matrix comprising a main matrix (20) and a recovery matrix (22, $22_1$), the said recovery matrix comprising a number of inputs and the same number of outputs, the said number of inputs and outputs of the said recovery matrix being at least equal to the smallest of the numbers n and p, n being the number of inputs of the main matrix, and p the number of outputs of the said main matrix, **characterized in that** the switches of the said recovery matrix are arranged and controlled so that it acts as a single switch the inputs of which are formed by any pair ($e'_i$ $e'_j$) of inputs of the said recovery matrix and the two outputs of which are formed by the two outputs (s'i, s'j) of the said recovery matrix which have the same position as the said pair of inputs, the other inputs of the recovery matrix being connected to the outputs of the same position of the said main matrix and **in that** the said recovery matrix comprises a number of switches ($52_i$,..., $52_p$) which is equal to the number of inputs and outputs of this matrix mounted so that the first input ($54_i$) and the first output ($56_i$) of the switch of position i form respectively the input and the output of position i of this recovery matrix,
the second input ($58_i$) of each switch being connected to the second output ($60_{i+1}$) of the switch of immediately higher position, and
the second output ($60_1$) of the switch of position 1 being connected to the second input ($58_p$) of the switch of position n or p.

**2.** Matrix according to Claim 1, **characterized in that** the means for controlling the recovery matrix are such that the switches corresponding to the pair of inputs and outputs to be switched are actuated in the event of a failure.

**3.** Matrix according to either one of the preceding claims, **characterized in that** the recovery matrix comprises p inputs and p outputs, its p inputs being connected to the p outputs of the main matrix.

**4.** Matrix according to either one of Claims 1 or 2, **characterized in that** the recovery matrix is placed upstream of the main matrix, its n outputs being connected to the n inputs of the main matrix.

**5.** Matrix according to either one of Claims 1 or 2, **characterized in that** the recovery matrix is placed inside the main matrix so that an input and an output of the same position i of this recovery matrix are inserted into the path of a conductor bringing a signal to an output of determined position of the main matrix, no other input/output pair of the recovery matrix being inserted into the path of the signal sent to the output of determined position of the main matrix.

**6.** Matrix according to any one of the preceding claims, **characterized in that** it comprises a number of recovery matrices equal to the maximum predicable number of switches of the main matrix that may be blocked simultaneously.

## Patentansprüche

**1.** Matrix von Schaltern mit zwei Stellungen, die es je erlauben, m eingehende Signale an m Ausgänge zu übertragen, wobei die Matrix dazu bestimmt ist, Blockier-Betriebsstörungen der Schalter zu verkraften, wobei die Steuerung der Matrix so ist, dass alle Anordnungen von m eingehenden Signalen an m Ausgängen möglich sind, wobei die Matrix eine Hauptmatrix (20) und eine Störungsbeseitigungsmatrix (22, $22_1$) aufweist, wobei die Störungsbeseitigungsmatrix die gleiche Anzahl von Eingängen und die gleiche Anzahl von Ausgängen aufweist, wobei die Anzahl von Eingängen und Ausgängen der Störungsbeseitigungsmatrix mindestens gleich der kleineren der Anzahlen n und p ist, wobei n die Anzahl von Eingängen der Hauptmatrix und p die Anzahl von Ausgängen der Hauptmatrix ist, **dadurch gekennzeichnet, dass** die Schalter der Störungsbeseitigungsmatrix so eingerichtet und gesteuert werden, dass sie wie ein einfacher Schalter wirkt, dessen Eingänge aus einem beliebigen Paar $(e'_i, e'_j)$ von Eingängen der Störungsbeseitigungsmatrix bestehen und dessen zwei Ausgänge aus den zwei Ausgängen $(s'_i, s'_j)$ der Störungsbeseitigungsmatrix bestehen, die den gleichen Rang wie das Paar von Eingängen haben, wobei die anderen Eingänge der Störungsbeseitigungsmatrix mit den Ausgängen des gleichen Rangs der Hauptmatrix verbunden sind, und dass die Störungsbeseitigungsmatrix eine Anzahl von Schaltern $(52_1, ..., 52_p)$ aufweist, die gleich der Anzahl von Eingängen und Ausgängen dieser Matrix ist, die so montiert sind, dass der erste Eingang $(54_i)$ und der erste Ausgang $(56_i)$ des Schalters des Rangs i den Eingang bzw. den Ausgang des Rangs i dieser Störungsbeseitigungsmatrix bilden,

wobei der zweite Eingang $(58_i)$ jedes Schalters mit dem zweiten Ausgang $(60_{i+1})$ des Schalters eines direkt darüber liegenden Rangs verbunden ist, und

der zweite Ausgang $(60_1)$ des Schalters des Rangs 1 mit dem zweiten Eingang $(58_p)$ des Schalters des Rangs n oder p verbunden ist.

2. Matrix nach Anspruch 1, **dadurch gekennzeichnet, dass** die Steuereinrichtungen der Störungsbeseitigungsmatrix so sind, dass die dem zu schaltenden Paar von Eingängen und Ausgängen entsprechenden Schalter im Fall einer Betriebsstörung betätigt werden.

3. Matrix nach einem der vorhergehenden Ansprüche, **dadurch gekennzeichnet, dass** die Störungsbeseitigungsmatrix p Eingänge und p Ausgänge aufweist, wobei ihre p Eingänge mit den p Ausgängen der Hauptmatrix verbunden sind.

4. Matrix nach einem der Ansprüche 1 oder 2, **dadurch gekennzeichnet, dass** die Störungsbeseitigungsmatrix vor der Hauptmatrix angeordnet ist, wobei ihre n Ausgänge mit den n Eingängen der Hauptmatrix verbunden sind.

5. Matrix nach einem der Ansprüche 1 oder 2, **dadurch gekennzeichnet, dass** die Störungsbeseitigungsmatrix im Inneren der Hauptmatrix so angeordnet ist, dass ein Eingang und ein Ausgang des gleichen Rangs i dieser Störungsbeseitigungsmatrix auf dem Weg eines Leiters zwischengeschaltet sind, der einem Ausgang bestimmten Rangs der Hauptmatrix ein Signal zuführt, wobei kein weiteres Eingang/Ausgang-Paar der Störungsbeseitigungsmatrix auf dem Weg des Signals zwischengeschaltet ist, das für den Ausgang des bestimmten Rangs der Hauptmatrix bestimmt ist.

6. Matrix nach einem der vorhergehenden Ansprüche, **dadurch gekennzeichnet, dass** sie eine Anzahl von Störungsbeseitigungsmatrizen gleich der vorhersehbaren maximalen Anzahl von Schaltern der Hauptmatrix aufweist, die gleichzeitig blockiert sein können.

FIG.1

FIG.2

FIG.3a

FIG.3b

FIG.3c

FIG.4

FIG.5

FIG.6

FIG.7

FIG.8

## RÉFÉRENCES CITÉES DANS LA DESCRIPTION

**Littérature non-brevet citée dans la description**

- **FUNAHASHI A et al.** FAULT TOLERANCE OF THE TBSF (TANDEM BANYAN SWITCHING FABRICS) AND PBSF (PILED BANTAN SWITCHING FABRICS''). *IEICE TRANSACTIONS ON INFORMATION AND SYSTEMS,* Août 1996, vol. E79-D (8), 1180-1189